# EUROPÄISCHE PATENTSCHRIFT

(11) **EP 1 254 004 B1**
(45) Veröffentlichungstag und Bekanntmachung des Hinweises auf die Patenterteilung: **18.08.2004**
(21) Anmeldenummer: 01916963.0
(22) Anmeldetag: 30.01.2001
(51) Int. Cl.: B29C 45/27

(54) **DÜSE FÜR SPRITZGIESSWERKZEUGE UND DÜSEN-ANORDNUNG**
NOZZLE FOR INJECTION MOULDING TOOL AND NOZZLE ARRANGEMENT
BUSE POUR OUTILS DE MOULAGE PAR INJECTION ET DISPOSITIF DE BUSES

(30) Priorität: 31.01.2000 DE 10004068; 31.01.2000 DE 10004072
(43) Veröffentlichungstag der Anmeldung: 06.11.2002
(73) Patentinhaber: Günther Heisskanaltechnik GmbH, 35066 Frankenberg/Eder (DE)
(72) Erfinder: GÜNTHER, Herbert, 35108 Allendorf (DE)
(74) Vertreter: Olbricht, Karl Heinrich, Dipl.-Phys.
(86) Internationale Anmeldenummer: PCT/EP2001/000974
(87) Internationale Veröffentlichungsnummer: WO 2001/054882

(56) Entgegenhaltungen:
- WO-A-98/42489
- DE-A- 4 034 934
- DE-A- 19 723 374
- DE-A- 19 941 038
- US-A- 3 935 972
- US-A- 4 892 474

## Beschreibung

Die Erfindung betrifft eine Düse für Spritzgießwerkzeuge gemäß dem Oberbegriff von Anspruch 1 und eine Düsen-Anordnung gemäß dem Oberbegriff von Anspruch 25.

Heißkanal- oder Kaltkanaldüsen sind allgemein bekannt. Sie werden in Spritzgießwerkzeugen eingesetzt, um eine fließfähige Masse bei einer vorgebbaren Temperatur unter hohem Druck einem trennbaren Werkzeugblock (Formnest) zuzuführen. Damit sich beispielsweise eine heiße Kunststoffmasse innerhalb der Düse nicht vorzeitig abkühlt, ist - wie aus DE-U1-295 01 450 hervorgeht - eine elektrische Heizung vorgesehen, welche den Düsenkörper bzw. einen darin ausgebildeten Strömungskanal konzentrisch umgibt und den flüssigen Kunststoff auf der gewünschten Temperatur hält. Werden hingegen beispielsweise reaktive Polymere verarbeitet, ist es erforderlich, den Düsenkörper zu kühlen, damit die zu verarbeitende Masse beim Eintritt in das Formnest eine bestimmte Temperatur nicht übersteigt. Zur Erfassung der Temperatur verwendet man gewöhnlich einen Temperaturfühler.

Bei Heißkanaldüsen sind der Düsenkörper und die Heizung gewöhnlich als separate Bauelemente ausgeführt, wobei die Heizung gemeinsam mit dem Temperaturfühler in einer Ummantelung integriert ist, die umfangsseitig auf den Düsenkörper aufsteckbar ist. Die Ummantelung kann, wie z.B. in DE-U1-89 15 318, DE-U1-295 07 848 oder US-PS-4,558,210 offenbart, ein starres Gebilde sein, das mittels Halte- bzw. Spannelementen auf dem Düsenkörper in axialer Richtung festlegbar ist. Oder man verwendet flexible Heizstreifen bzw. -matten, die auf dem Außenumfang des Düsenkörpers fixiert werden (siehe z.B. EP-B1-0 028 153 oder WO 97/03540).

Ein wesentlicher Nachteil dieser generell mechanisch lösbaren Heizvorrichtungen besteht in dem meist wenig effizienten Wärmeübergang von dem Heizelement auf den Düsenkörper. Um daher die Heizung gegen Überhitzung zu schützen, ist man gezwungen, diese größer zu dimensionieren, wodurch nicht zuletzt die Einbaumaße und damit der Platzbedarf im Werkzeug vergrößert werden. Darüber hinaus bestehen Probleme bei der linearen Temperaturverteilung innerhalb der Wandungen des Strömungskanals. Letztere weisen nur selten über die gesamte Länge des Strömungskanals eine konstante Temperatur auf. Aufgrund der vergrößerten Wärmeabfuhr an der Düsenspitze läßt sich nur mit relativ hohem Aufwand auch dort eine ausreichende Leistungsdichte und damit gleichbleibende Temperaturen erzielen.

Unabhängig davon, ist es in zahlreichen Anwendungsbereichen erforderlich, separate Kavitäten gleichzeitig oder kompliziertere Bauteile mehrfach anzuspritzen. Hierzu werden Heißkanal- oder Kaltkanaldüsen in definierten Abständen parallel zueinander in einem Verteiler oder einer Verteilerplatte montiert. Allerdings lassen sich die Düsen aufgrund ihrer konzentrischen Heiz- bzw. Kühlvorrichtungen und der meist seitlich aus dem Düsengehäuse herausgeführten Anschlüsse nicht beliebig dicht nebeneinander anordnen, was insbesondere bei kleinen Nestabständen oder eng benachbarten Anspritzpunkten zu Problemen führt.

Um dem zu begegnen, hat man beispielsweise bei einer Heißkanaldüse in DE-U1-296 10 268 versucht, durch seitliche Anordnung von Düsenkanal und Heizung, die Nestabstände zu verringern. Hierdurch ist jedoch die Breite der Düse lediglich in nur einer Vorzugsrichtung unabhängig von der Breite der Heizung, die auch weiterhin einen relativ großen Raum einnimmt. Ein weiterer Nachteil besteht darin, daß die Wärmeeinwirkung auf die Kunststoffmasse nur von einer Seite aus erfolgt, was zu unterschiedlichen Temperaturverteilungen im Strömungskanal führen kann. Die Anpassung und Steuerung der erforderlichen Leistung ist nur bedingt möglich, da die Leistungsdichte der meist als Heizpatrone ausgebildeten Heizung nur begrenzt auf einen Anwendungsfall abstimmbar ist. Zahlreiche Steckverbindungen und aufwendige Kabelführungen erfordern bei entsprechendem Platzbedarf auch weiterhin einen nicht unerheblichen Montageaufwand, insbesondere dann, wenn die Anschlüsse der betreffenden Heizung im Innenbereich der Düsenanordnung liegen.

US-A-4 892 474 offenbart eine Heißkanaldüse mit einem im Querschnitt kreisrunden Düsenkörper, der an zwei gegenüberliegenden Seiten durch die Ausbildung sekanter Abschnitte abgeflacht ist. Dort werden zwei im Querschnitt segmentförmige Heizplatten aufgebracht, so daß die Düse insgesamt wieder einen kreisrunden Querschnitt erhält. Im Bereich der aneinanderstoßenden Seitenflächen des Düsenkörpers und der Heizplatten sind isolierende Luftspalte ausgebildet, um ein gewünschtes Wärmeübergangsprofil von der Heizung auf den Düsenkörper zu erzeugen.

Von Nachteil hierbei ist, daß die aus einer massiven Kupfer-Legierung gegossenen Heizplatten den Querschnitt der Düse wieder zu einer Kreisfläche ergänzen. Dadurch nimmt die Heizung und damit die gesamte Heißkanaldüse einen relativ großen Raum ein, d.h. die Düsen lassen sich nicht beliebig dicht nebeneinander anordnen. Der Wärmeübergang von der Heizung auf den Düsenkörper ist zudem wenig effizient, weil über die Luftspalte ein nicht unerheblicher Teil der erzeugten Wärmeenergie von vomeherein verloren geht. Man ist daher auch hier gezwungen, die Heizung insgesamt größer zu dimensionieren, was sich ungünstig auf die Baugröße der Heizung und auf deren Energieverbrauch auswirkt.

Ziel der Erfindung ist es, diese und weitere Nachteile des Standes der Technik zu überwinden und eine Düse für ein Spritzgießwerkzeug zu schaffen, die innerhalb ihres Düsenkörpers eine gleichmäßige Wärmeübergangs- und Temperaturverteilungs-Charakteristik aufweist und beim Einbau in eine Form einen nur geringen Platzbedarf erfordert. Auf möglichst rationelle Weise soll ein wirtschaftlich herstell- und montierbarer Aufbau verwirklicht werden, der einen dauerhaft zuverlässigen Betrieb gewährleistet.

Ein weiteres wichtiges Ziel der Erfindung besteht darin, eine Düsen-Anordnung mit Heißkanal- und/oder Kaltkanaldüsen in dicht gepackter Anordnung zu schaffen die beliebig viele Düsen in dicht gepackter Anordnung aufweist und die mit einfachen Mitteln kostengünstig herstellbar sowie rasch zu montieren ist. Innerhalb der Düsen soll ferner eine gleichmäßige Wärmeübergangs- und Temperaturverteilungs-Charakteristik gewährleistet sein.

Hauptmerkmale der Erfindung sind in den Ansprüchen 1 und 25 angegeben. Ausgestaltungen sind Gegenstand der Ansprüche 2 bis 24 und 26 bis 33.

Bei einer Düse für ein Spritzgießwerkzeug mit einem an einem Werkzeug oder Verteiler montierbaren Düsenkörper, in dem wenigstens ein endseitig an oder in einer Düsenspitze mündender Strömungskanal für eine Materialschmelze ausgebildet ist, und mit einer Heiz- und/oder Kühlvorrichtung für die Materialschmelze, wobei der Düsenkörper wenigstens eine im wesentlichen ebene Seitenfläche aufweist, die in flächiger Verbindung und/oder Anordnung die Heiz- und/oder Kühlvorrichtung als integralen Bestandteil trägt oder aufnimmt, sieht die Erfindung laut Anspruch 1 vor, die Düse samt der Heiz- und/oder Kühlvorrichtung einen Flachkörper bildet, dessen Gesamtdicke im wesentlichen von der Breite des Düsenkörpers bestimmt ist

Ein solcher Aufbau hat gegenüber dem Stand der Technik den Vorteil, daß die Heizung über die Abmessungen des Düsenkörpers hinaus keinen größeren Raum mehr einnimmt. Die Gesamtabmessungen der Düse werden vielmehr von dem Düsenkörper bestimmt, dessen ebene Seitenfläche die Heizung trägt oder aufnimmt. Dies hat zur Folge, daß die gesamte Heiß- oder Kaltkanaldüse - d.h. der Düsenkörper mit Heizung bzw. Kühlvorrichtung und Anschlußtechnik - äußerst schmal ausgebildet ist und beim Einbau in ein Werkzeug einen nur geringen Platzbedarf erfordert.

Die integrale Verbindung zwischen Heizvorrichtung bzw. Kühlvorrichtung und Seitenfläche gewährleistet dabei einen stets optimalen Wärmeübergang von der Heizung auf den Düsenkörper, der äußerst gleichmäßig und präzise erwärmt wird. Durch die ferner vorgesehene flächige Verbindung und/oder Anordnung der Heizung auf der ebenen oder leicht gekrümmten Seitenfläche weist die gesamte Heißkanaldüse im Vergleich zu herkömmlichen Bauformen bei nahezu gleichen Leistungsmerkmalen äußerst kompakte Abmessungen auf. Gleiches gilt für eine in den Düsenkörper integrierte Kühlvorrichtung, die gemäß einer bevorzugten Ausführungsform unmittelbar in den Düsenkörper eingelassen ist und bündig mit diesem abschließt. Der Wärmeübergang von dem heißen Medium auf die Kühlvorrichtung ist stets optimal.

Da die Wärme bei der Heißkanaldüse direkt auf der Seitenfläche des zu beheizenden Düsenkörpers erzeugt und abgenommen wird, kann die Leistungsdichte einer solchen Heizung deutlich erhöht werden; eine Überhitzung der meist empfindlichen Heizelemente wird zuverlässig vermieden. Darüber hinaus benötigt man keine aufwendigen Steuerungseinrichtungen, die durch thermische Massen bedingte Reaktionsverzögerungen berücksichtigen müssen. Die in dem Strömungskanal befindliche Kunststoffmasse wird rasch und präzise erhitzt, was sich günstig auf den gesamten Produktionsablauf auswirkt. Eine besonders gleichmäßige Erwärmung bzw. Kühlung erreicht man, wenn zwei einander gegenüberliegende Seitenflächen mit wenigstens einer Heizund/oder Kühlvorrichtung versehen sind.

Besonders geringe Abmessungen erzielt man, wenn eine auf den ebenen und/oder zumindest abschnittsweise gekrümmt ausgebildeten Seitenflächen des Düsenkörpers aufgebrachte Heizung als Flachschichtheizung ausgebildet ist.

Die Temperaturerfassung erfolgt gemäß einer weiteren Ausgestaltung der Erfindung vorzugsweise in der gleichen Ebene wie die Wärme- oder Kälteerzeugung, so daß kein zusätzlicher Platzbedarf entsteht. Heizung, Kühlung und Temperaturfühler können zudem in gleicher Weise und in nur einem Arbeitsgang auf dem Düsenkörper aufgebracht werden, was die Herstellung erheblich vereinfacht.

Bei einer Düsen-Anordnung für Spritzgießwerkzeuge bestehend aus wenigstens zwei Düsen mit jeweils einem an einem Werkzeug oder Verteiler montierbaren Düsenkörper, in dem wenigstens ein endseitig an oder in einer Düsenspitze mündender Strömungskanal für eine Materialschmelze ausgebildet ist, und mit einer Heiz- und/oder Kühlvorrichtung für die Materialschmelze, die einen integralen Bestandteil jeder Düse darstellt, wobei die Düsen eine Düsenreihe bilden und innerhalb dieser parallel dicht nebeneinander angeordnet sind, sieht die Erfindung gemäß Anspruch 25 vor, daß die Düsenreihe einen Flachkörper bildet und wenigstens eine im wesentlichen ebene Seitenfläche aufweist, die in flächiger Verbindung und/oder Anordnung die Heizund/oder Kühlvorrichtung trägt oder aufnimmt, wobei die Gesamtdicke des Flachkörpers im wesentlichen von der Breite der Düsenkörper bestimmt ist.

Durch diesen äußerst kompakten und platzsparenden Aufbau liegen die Düsenspitzen der einzelnen Düsen sehr eng nebeneinander. Mit einer solchen Düsenreihe lassen sich problemlos mehrere Formnester oder mehrere Angußpunkte gleichzeitig anspritzen, wobei man die Nestabstände bzw. die Abstände der Angußpunkte mit bis zu 5 mm in jeder Richtung extrem klein wählen kann.

Eine kammartige Anordnung der Düsen innerhalb der Düsenreihe gewährleistet, daß die Düsenkörper zumindest abschnittsweise voneinander beabstandet sind und auf diese Weise unterschiedlichen Wärmedehnungen folgen können. Der bevorzugt insgesamt einstückige Düsen-Flachkörper läßt sich ferner in nur einem Arbeitsgang rasch und bequem an einem Verteiler montieren, was die Handhabung erheblich vereinfacht.

Vielfältige Abstandsraster zwischen den Heiß- und/oder Kaltkanaldüsen lassen sich realisieren, wenn man innerhalb eines Verteilers mehrere Einzeldüsen oder Düsenreihen im Flächenschluß nebeneinander anordnet. Die einzelnen Düsen der Flachkörper bilden nunmehr eine Batterie, die sowohl in Längs- als auch in Querrichtung äußerst kleine Düsenabstände aufweist. Da jede einzelne Düse beispielsweise mit einer flächigen Heizung oder Flachheizung versehen ist, die auf den Seitenflächen der Flachkörper bevorzugt untereinander verbunden und mit jeweils einem gemeinsamen Anschluß versehen sind, werden auch innenliegende Düsen einer Batterie problemlos mit der erforderlichen Heizenergie versorgt, was bei den bisherigen Lösungen nicht möglich war. Die gesamte Anschlußsituation der Heizung bzw. der Kühlung ist erheblich vereinfacht, was sich nicht nur günstig auf den Montageaufwand auswirkt.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine Seitenansicht einer Heißkanaldüse,
- Fig. 2: eine Draufsicht auf die Heißkanaldüse von Fig. 1,
- Fig. 3: einen vergrößerten Querschnitt durch die Heißkanaldüse entlang der Linie A-A in Fig. 1,
- Fig. 4: eine Seitenansicht einer Heißkanaldüse mit auswechselbarem Temperatur-Meßfühler,
- Fig. 5: eine Draufsicht auf die Heißkanaldüse von Fig. 4,
- Fig. 6: eine Seitenansicht einer Düsenreihe,
- Fig. 7: eine Draufsicht auf die Düsenreihe von Fig. 6,
- Fig. 8: eine andere Ausführungsform einer Heißkanaldüse,
- Fig. 9: eine Schnittansicht entlang der Linie A-A in Fig. 8,
- Fig. 10: eine Schnittansicht entlang der Linie B-B in Fig. 8,
- Fig. 11: eine Seitenansicht einer anderen Bauform einer Düsenreihe,
- Fig. 12: eine Draufsicht auf die Düsenreihe von Fig. 11,
- Fig. 13: eine weitere Ausführungsform einer Heißkanaldüse,
- Fig. 14: eine Schnittansicht entlang der Linie A-A in Fig. 13,
- Fig. 15: eine Schnittansicht entlang der Linie B-B in Fig. 13,
- Fig. 16: eine noch andere Variante einer Düsenreihe,
- Fig. 17: eine Schnittansicht entlang der Linie C-C in Fig. 16,
- Fig. 18: eine Schnittansicht entlang der Linie D-D in Fig. 16,
- Fig. 19: eine Draufsicht auf eine Heißkanaldüsen-Batterie,
- Fig. 20: eine andere Ausführungsform eine Heißkanaldüsen-Anordnung,
- Fig. 21: eine Ausschnittsvergrößerung von Fig. 20, teilweise im Schnitt,
- Fig. 22: eine Draufsicht auf die Heißkanaldüsen-Anordnung von Fig. 20,
- Fig. 23: eine Schnittansicht einer in einem Werkzeug eingebauten Heißkanaldüsen-Anordnung und
- Fig. 24: eine Draufsicht auf die Anordnung von Fig. 23, teilweise im Schnitt.

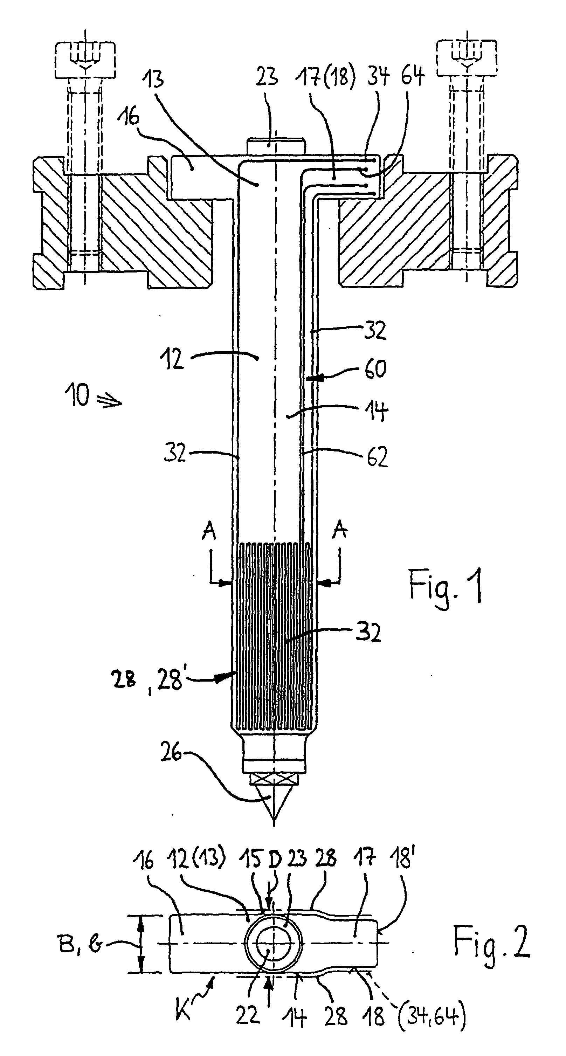

Die in Fig. 1 allgemein mit 10 bezeichnete Düse ist eine Heißkanaldüse und im wesentlichen T-förmig ausgebildet. Sie hat einen im Querschnitt rechteckigen Düsenkörper 12, der an seinem oberen Ende 13 zur Festlegung an einem (nicht dargestellten) Heißkanalwerkzeug oder -verteiler gegenüberliegend mit zwei Halteschultern in Form von Ansätzen 16, 17 versehen ist. Die Breite b der mit dem Düsenkörper 12 einstückigen Ansätze 16, 17 entspricht der Breite B des Düsenkörpers 12, so daß die Heißkanaldüse 10 insgesamt einen Flachkörper K bildet (siehe Fig. 2).

Innerhalb des sich in Axialrichtung erstreckenden Düsenkörpers 12 ist mittig ein Strömungskanal 22 für eine Materialschmelze eingebracht. Der bevorzugt als Bohrung ausgebildete Kanal 22 mündet an seinem unteren Ende in einer Düsenspitze 26, welche den Kanal 22 bis an eine (nicht dargestellte) Ebene eines (ebenfalls nicht sichtbaren) Formnests fortsetzt. Die Düsenspitze 26 ist endseitig in den Düsenkörper 12 eingesetzt, vorzugsweise eingeschraubt. Sie kann aber auch bei gleicher Funktionsweise mit dem Düsenkörper 12 einstückig sein.

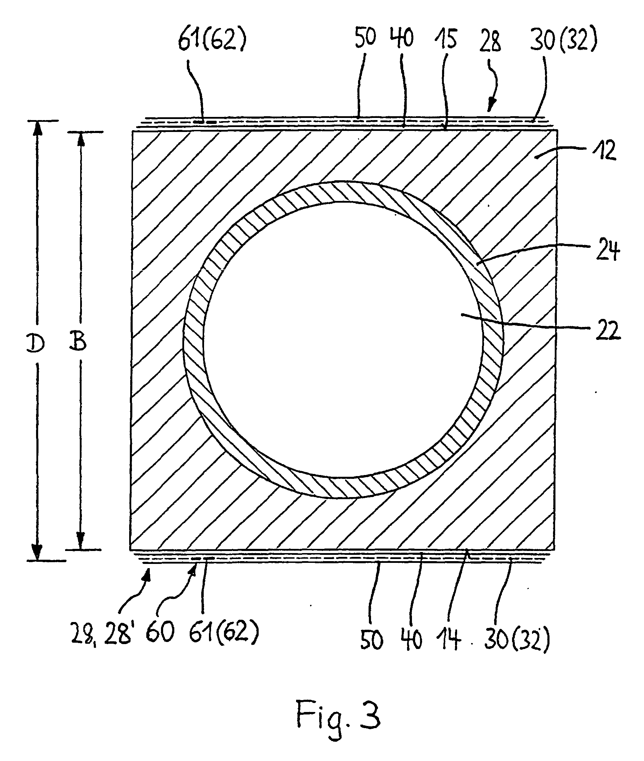

Zur besseren Ankopplung und Abdichtung des Strömungskanals 22 gegenüber dem Heißkanalverteiler trägt der Düsenkörper 12 zwischen den Ansätzen 16, 17 einen ringförmigen Zentrieransatz 23, der einstückig mit dem Düsenkörper ist oder Teil eines Materialrohrs 24 sein kann. Letzteres kann aus einem anderen Material gefertigt sein wie der Düsenkörper 12 und wird - wie in Fig. 3 angedeutet - formschlüssig in diesen eingesetzt. Beispielsweise könnte das Materialrohr 24 aus einem hochfesten Werkstoff gefertigt sein, während der Düsenkörper 12 aus einem hochwärmeleitfähigen Material besteht, was sich günstig auf den Wärmeübergang auswirkt. Man kann den mit dem Materialrohr 24 einstückigen Düsenkörper 12 aber auch insgesamt aus Stahl fertigen, was die Herstellung entsprechend vereinfacht.

Zwei gegenüberliegende ebene Seitenflächen 14, 15 des Düsenkörpers 12 dienen als Trägerflächen für je eine Flachschichtheizung 28. Diese besteht aus einer unmittelbar auf dem Metall aufgebrachten keramischen Dielektrikumsschicht 40 als Isolationsschicht, einer darüber aufgebrachten Heizschicht 30, die - wie in Fig. 1 schematisch angedeutet - zumindest eine mäanderförmige Heizleiterbahn 32 aufweist, sowie einer äußeren Abdeckschicht 50, welche die Heizleiterbahn 32 und die darunter liegende Dielektrikumsschicht 40 nach außen hin abdeckt und elektrisch isoliert.

Die beliebig gestaltbare Heizleiterbahn 32 kann je nach erforderlicher Leistung in unterschiedlicher Dichte und Anordnung auf der Isolationsschicht 40 aufgebracht sein. Hierdurch läßt sich bei Bedarf eine definierte Temperaturverteilung innerhalb des Düsenkörpers 12 erzielen. Bevorzugt sind die symmetrisch zu beiden Seiten des Düsenkörpers 12 liegenden mäanderförmigen Schleifen der Heizleiterbahnen 32 nahe dem Bereich der Düsenspitze 26 konzentriert, um bis an das Formnest heran eine ausreichende Temperatur erzeugen und aufrechterhalten zu können.

Um sowohl den Anstieg als auch den Verlauf der Temperatur innerhalb des Düsenkörpers 12 verfolgen bzw. kontrollieren zu können, ist auf zumindest einer der Seitenflächen 14, 15 ein Temperatur-Meßfühler 60 aufgebracht. Dieser ist ebenso wie die Heizung 28 als flache Schicht 61 ausgebildet, die zusammen mit der Heizschicht 30 in einer gemeinsamen Ebene liegt (siehe Fig. 3). Innerhalb der Meßschicht 61 ist zumindest eine durchgehende bifilare Leiterbahn 62 ausgebildet, die im unteren Bereich des Düsenkörpers 12 bis nahe an die Düsenspitze 26 heranreicht und im oberen Bereich des Düsenkörpers 12 auf einer Seitenfläche 18 des beispielsweise rechten Ansatzes 17 in Anschlußkontakten 64 endet.

Dort befinden sich beidseitig auch Anschlußkontakte 34 für die auf beiden Seiten 14, 15 des Düsenkörpers 12 verlaufenden Heizleiterbahnen 32. Man erkennt in Fig. 2, daß der Ansatz 17 im Bereich der Kontaktflächen 34, 64 gegenüber dem Düsenkörper 12 endseitig verjüngt ausgebildet ist, so daß ein auf den Ansatz 17 aufsteckbarer (nicht dargestellter) elektrischer Anschlußstecker die Gesamtdicke B des Düsenkörpers 12 und damit die Gesamtdicke des Flachkörpers K nicht übersteigt. Die gesamte Heißkanaldüse 10 ist folglich mit samt der Anschlußtechnik äußerst schmal ausgebildet. Alternativ kann man auch vorsehen, daß die Kontaktflächen 34, 64 für die Heizleiterbahnen bzw. für den Temperaturfühler 60 auf der Stimfläche des Ansatzes 17 liegen.

Die Heizschicht 30, die Isolierschicht 40, die Abdeckschicht 50, gegebenenfalls eine zusätzliche (nicht gezeigte) Kontaktschicht sowie die Meßschicht 61 werden nacheinander mittels Direktbeschichtung stoffschlüssig auf dem Düsenkörper 12 bzw. auf dessen Seitenflächen 14, 15 aufgetragen und unter den jeweils materialspezifisch vorgegebenen Einbrennbedingungen eingebrannt, so daß ein stoffschlüssiger Schichtverbund entsteht, dessen Gesamtdicke zwischen 0,1 bis 1,0 mm, vorzugsweise zwischen 0,2 und 0,6 mm, liegt. Jede Flachschichtheizung 28 ist als integraler Bestandteil des Düsenkörpers 12 in flächiger Verbindung auf den Seitenflächen 14, 15 des Düsenkörpers 12 unlösbar aufgebracht, so daß bei minimalen Abmessungen eine optimale Leistungs- und Wärmeverteilung erzielt wird.

Mittels einer spezifischen Fehlanpassung des linearen thermischen Ausdehnungskoeffizienten der Dielektrikumsschicht 40 (TEC_{D}) an den linearen thermischen Ausdehnungskoeffizienten des Düsenkörpers 12 (TEC_{K}) wird beim Einbrennen der Isolationsschicht 40 innerhalb dieser eine mechanische Druckvorspannung erzeugt. Durch diese spannungstolerante Verbindung ist die Isolationsschicht 40 als Trägerschicht der Heizung 28 in der Lage, der durch den Spritzgießprozeß technologisch bedingten pulsierenden Innendruckbelastungen problemlos standzuhalten, ohne daß Risse oder sonstige Beschädigungen an der Heizung 28 auftreten. Da die einzelnen Funktionsschichten 30, 40, 50, 61 des Schichtverbunds aufgrund ihres materialspezifisch sehr ähnlichen Aufbaus zudem untereinander eine außerordentlich gute Haftfestigkeit aufweisen, hält die Heizung 28 insgesamt selbst extremen mechanischen und/oder thermischen Belastungen dauerhaft stand.

Als Beschichtungsverfahren zum Auftragen der einzelnen Funktionsschichten 30, 40, 50, 61 eignet sich die Folien- und die Dickschicht-Siebdrucktechnik, d.h. man verwendet bevorzugt einbrennbare Folien oder Dickschichtpasten. Mit diesen erzielt man eine insgesamt ökonomische Verfahrensführung, wenn parallel zu dem Einbrennprozeß der Dielektrikumschicht 40 eine induktive Härtung des Düsenkörpers 12 durchgeführt wird. Dabei ist es wichtig, daß die jeweiligen Einbrennbedingungen (Einbrenntemperatur, Haltezeit, Abkühlrate) an die durch die verwendete Stahlsorte vorgegebenen Härtungsund Vergütungstemperaturen angepaßt sind. Insbesondere dürfen die Einbrenntemperaturen der nachfolgenden Schichten die Vergütungstemperaturen des Metalls nicht überschreiten, um den bereits vorgebildeten Gefügezustand des Metalls zu erhalten. Diese Anpassung kann beispielsweise durch eine geeignete Variation der Prozeßparameter für den Einbrennvorgang erreicht werden. Möglich ist aber auch eine materialspezifische Anpassung der zu verwendenden Dickschicht-Pasten.

Alternativ können die Schichten 30, 40, 50, 61 der Heizung 28 mittels Detonationsbeschichtung oder Plasmabeschichtung auf den Trägerflächen 14, 15 des bereits vergüteten Düsenkörpers 12 aufgebracht werden.

Die Heizung 28 ist durch die Direktaufbringung zuverlässig gegen Feuchtigkeitsaufnahme geschützt. Bei herkömmlichen Heizungen mit Rohrheizkörpem oder Wendelrohrpatronen ergeben sich durch die Feuchtigkeitsaufnahme des hygroskopischen Isoliermaterials neben Installationsproblemen auch Isolationsprobleme, da durch die eindringende Feuchtigkeit Kurzschlüsse entstehen können. Um dies zu vermeiden werden Regler benötigt, die bei der Inbetriebnahme der Heizung mit verminderter Heizleistung zunächst die Feuchtigkeit austreiben. Die erfindungsgemäße Heizungsvorrichtung braucht dies nicht. Sie ist vielmehr völlig dicht und unverlierbar mit dem Strömungskanal verbunden ist, so daß der bisher erforderliche Montage- und Regelungsaufwand entfällt. Dies wirkt sich günstig auf die Anschaffungs- und Montagekosten eines Heißkanalsystems aus.

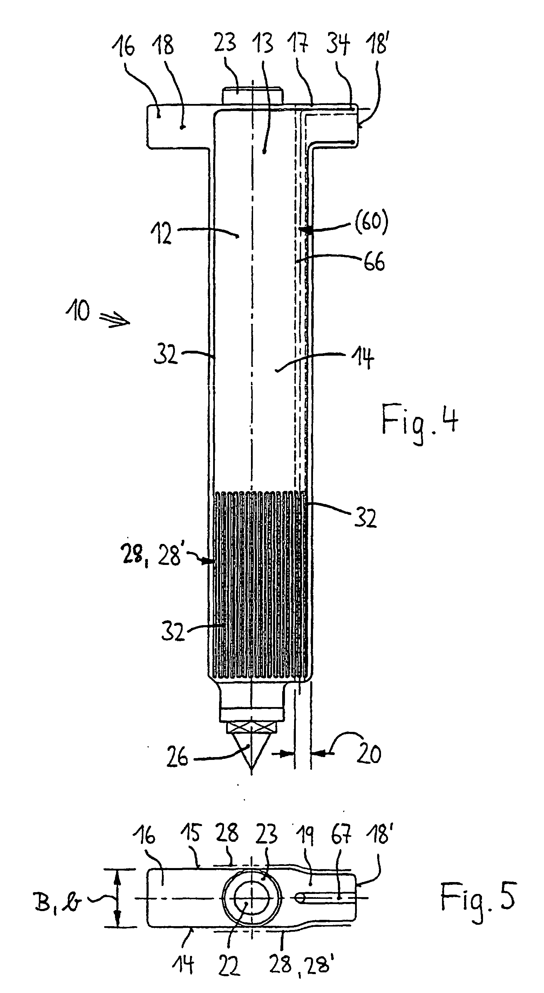

Eine weitere Alternative der Erfindung sieht vor, daß der Temperatur-Meßfühler 60 nicht als Schicht, sondern als austauschbares Einsteckelement ausgebildet ist. Dieses wird in einen in dem Düsenkörper 12 ausgebildeten Aufnahmekanal 66 eingelassen, der, wie Fig. 4 zeigt, im Bereich einer seitlichen Verbreiterung 20 des Düsenkörpers 12 parallel zum Strömungskanal 22 verläuft. Damit die Anschlußkontakte 64 des Temperaturfühlers 60 seitlich gut erreichbar sind, ist in die Oberseite 19 des Ansatzes 17 eine Nut 67 eingebracht, die in der Stirnseite 18' des Ansatzes 17 endet und ein (nicht gezeigtes) abgewinkeltes Ende mit Anschlußkontakten des Temperaturfühlers 60 aufnimmt (siehe Fig. 5).

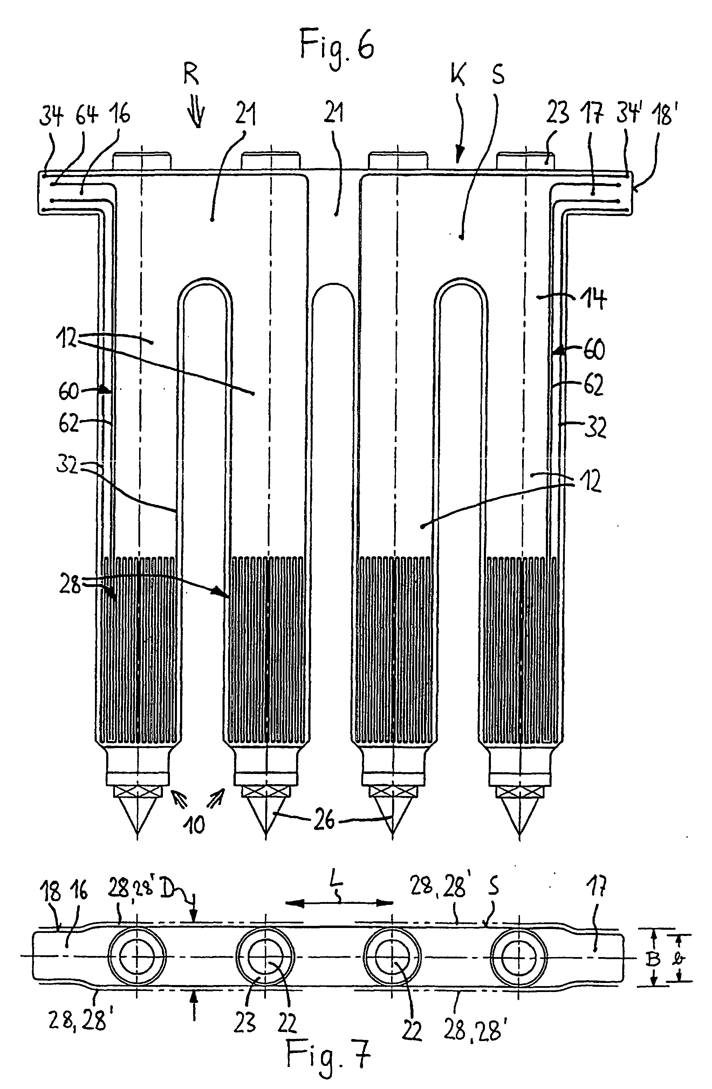

Die in Fig. 6 gezeigte Düsen-Anordnung besteht aus insgesamt vier Heißkanaldüsen 10, die innerhalb einer Reihe R parallel dicht nebeneinander angeordnet sind. Jede Heißkanaldüse 10 hat einen im Querschnitt rechteckigen Düsenkörper 12, die beide im Bereich ihrer oberen Enden 13 über einen Steg 21 miteinander verbunden, vorzugsweise mit diesem einstückig sind. Die Düsen-Anordnung bildet folglich insgesamt einen kammartigen Flachkörper K, dessen Gesamtdicke D im wesentlichen von der Breite B der Düsenkörper 12 bestimmt wird. Letztere tragen zur Festlegung an einem (nicht dargestellten) Heißkanalwerkzeug oder -verteiler gegenüberliegend zwei Halteschultern in Form von Ansätzen 16, 17. Deren Breite b entspricht der Breite B des Flachkörpers K (siehe Fig. 2).

Man erkennt, daß die Heißkanaldüsen 10 bzw. deren Düsenkörper 12 innerhalb des Flachkörpers K sehr dicht beieinander liegen, so daß relativ kleine Nestabstände von z.B. 8 mm und darunter realisiert werden können, was vor allem bei der sogenannten Outsert-Technik von großem Vorteil ist. Durch die Beschränkung der Verbindung zwischen den Düsenkörpem 12 auf den oberen Bereich 13 können sich die Düsenkörper 12 zum Ausgleich unterschiedlicher Wärmeleitungen vom kalten Werkzeug zum heißen Verteiler nach Bedarf ausdehnen. Innere Spannungen innerhalb des Flachkörpers K werden wirksam vermieden.

Zwei gegenüberliegende ebene Seitenflächen S des bevorzugt aus Stahl gefertigten Düsenkörpers 12 dienen als Trägerflächen für je eine Flachschichtheizung 28, wobei die Heizleiterbahnen 32 je zwei in einer Ebene benachbarter Heizungen 28 über die Stege 21 hinweg miteinander verbunden und gemeinsamen Anschlußkontakten 34, 34' zugeordnet sind. Letztere liegen seitlich auf endseitig verjüngt ausgebildeten Ansätzen 16, 17, welche jeweils an den außen liegenden Heißkanaldüsen 10 ausgebildet sind. Auf diese Weise können die in Fig. 6 paarweise zusammengefaßten Heizungen 28 separaten Heizkreisen zugeordnet werden, wobei die innen liegenden Heizungen 28 problemlos von außen mit Strom versorgt werden. Auf den außen liegenden Heißkanaldüsen 10 ist je ein Temperatur-Meßfühler 60 vorgesehen, dessen Anschlußkontakte 64 ebenfalls auf den Seitenflächen 18 der Ansätze 16, 17 aufgebracht sind.

Je nach Leistungsbedarf kann man die auf einer Seitenfläche S des Flachkörpers K aufgebrachten Heizungen 28 auch zu einer einzigen Heizleiterbahn 32 verbinden, wobei diese mit Kontaktflächen 34 auf nur noch einem Ansatz 17 beginnt bzw. endet. Die Leistungsversorgung erfolgt beispielsweise über einen einzigen Heizkreis, der seitlich über den Ansatz 17 angeschlossen wird. Die auf den Seiten S einander gegenüberliegenden Heizungen 28 sorgen für eine gleichmäßige Temperaturverteilung innerhalb des Strömungskanals 22, wobei die Heizleistung im Vergleich zu einer einseitigen Lösung insgesamt verringert werden kann.

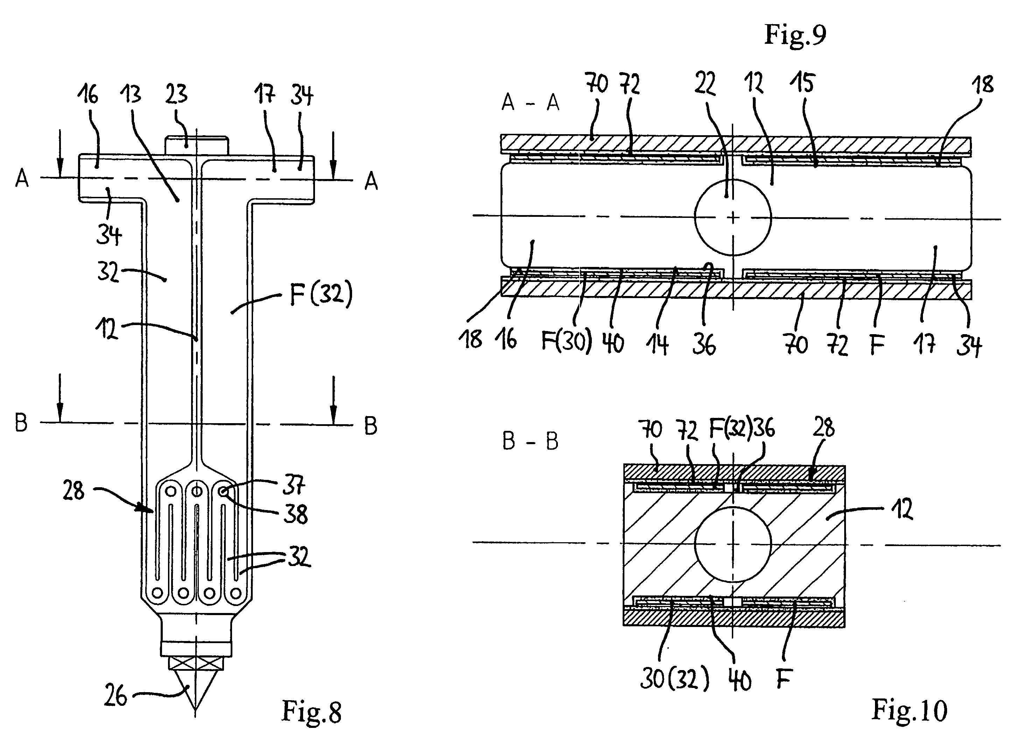

In der Ausführung von Fig. 6 und 7 sind 4 Heißkanaldüsen 10 nebeneinander angeordnet. Es lassen sich jedoch beliebige viele Düsen 10 nebeneinander in einer Reihe R anordnen, wobei es bei einer größeren Anzahl von Düsen 10 - je nach Leistungsbedarf - zweckmäßig sein kann, die Heizungsanschlüsse 34, 64 von beiden Seiten der Düsenreihe R her vorzusehen.

Eine andere Ausführungsform einer Heißkanaldüse 10 ist in Fig. 8 dargestellt. Die sich gegenüberliegenden Seitenflächen 14, 15 des Düsenkörpers 12 sind jeweils mit einer flachen Ausnehmung 36 versehen, deren Tiefe beispielsweise 0,4 mm beträgt. Jede Ausnehmung 36 ist mit einer Keramikschicht 40 ausgekleidet, deren elektrische Isolationseigenschaften sowohl für Niederspannungen als auch für Netzspannungen ausgelegt sein können. In die so ausgekleidete Tasche bzw. Aufnahme 36 wird eine Heizleiterbahn 32 aus einer dünnen Folie F eingelegt, die im Bereich der Düsenspitze 26 mehrfach mäanderförmig verläuft. Die Folie F besteht aus einem Widerstandsmaterial und ist im Bereich der mäanderförmigen Schleifen schmaler ausgebildet als im übrigen Bereich des Düsenkörpers 12. Auf diese Weise wird die Leistung im Bereich der Düsenspitze 26 gezielt konzentriert. Zur Festlegung der Heizleiterbahn 32 in der Ausnehmung 36 sind Keramikstifte 37 vorgesehen, die in korrespondierende Öffnungen 38 in der Folie F form- und/oder kraftschlüssig eingreifen. Wie Fig. 9 zeigt, erstrecken sich die Heizleiterbahnen 32 mit ihren Enden bis in die Seitenflächen 18 der einander gegenüberliegenden Halteschultern bzw. Ansätze 16, 17 hinein, wobei die ebenfalls bis dorthin reichende Ausnehmung 38 zu den Stirnseiten 18' der Ansätze 16, 17 hin offen ist. Dadurch sind die beidseitig aufgebrachten Heizleiterbahnen 32 den (nicht dargestellten) Anschlußkontakten eines (ebenfalls nicht sichtbaren) Steckers zugänglich.

Um die insgesamt flächige Heizungsanordnung nach außen hin zu isolieren, kann man die Heizleiterbahnen 32 mit einer Abdeckschicht 50 versehen oder mittels Deckplatten 70 abschließen (siehe Fig. 9 und 10). Letztere sind bevorzugt aus Metall gefertigt und tragen zumindest einseitig eine der jeweiligen Heizung 28 zugewandte Isolierschicht 72. Sie sind ferner T-förmig ausgebildet, so daß auch die seitlichen Ansätze 16, 17 mit den Anschlußkontakten 34 vollständig nach außen hin geschützt sind. Die Befestigung der Platten 70 erfolgt zweckmäßig mittels (nicht gezeigter) verschraubter oder verschweißter Bolzen. Durch diese wird zusätzliche eine Flächenpressung erzielt, um einen stets zuverlässigen Wärmekontakt zwischen der Folie F und dem Düsenkörper 12 bzw. K zu gewährleisten.

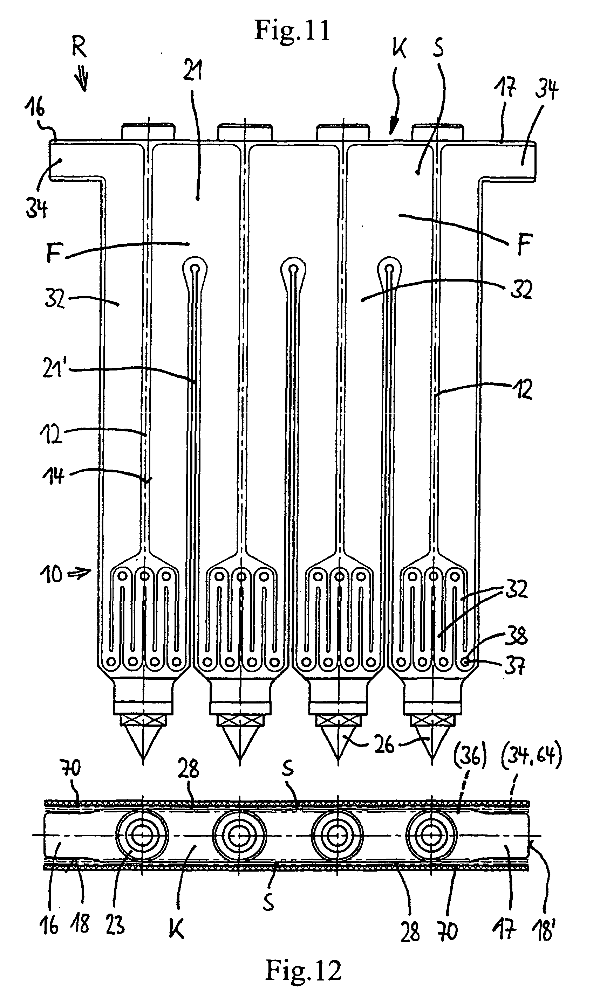

In der Ausführungsform von Fig. 11 und 12 sind mehrere Heißkanaldüsen 10 in einer Reihe R parallel dicht nebeneinander angeordnet, wobei die Stege 21 zwischen den Düsenkörpern 12 extrem schmal ausgebildet sind. Die Abstände zwischen den Düsenspitzen 26 sind bis auf unterhalb der Stege 21 verbleibende schmale Schlitze 21' auf ein Minimum reduziert, was extrem kleine Nestabstände ermöglicht. Auf jeder Seitenfläche S des insgesamt einstückigen Flachkörpers K ist eine sich über die Stege 21 hinweg erstreckende Ausnehmung 38 eingebracht, in die eine durchgehende Heizleiterbahn 32 aus Widerstandsfolie F eingelegt ist. Die Folienbahn F bzw. 32 beginnt auf der Seitenfläche 18 des einen Ansatzes 16 und endet auf der Seitenfläche 18 des anderen Ansatzes 17, wobei beide Absätze 16, 17 endseitig verjüngt ausgebildet sind, um einen Anschlußstecker aufnehmen zu können. Die beidseitig aufgebrachten Deckplatten 70 sind ebenfalls im Bereich unterhalb der Stege 21 geschlitzt, damit sich der obere kompakte Bereich der Düsenreihe R stärker ausdehnen kann als die unteren Teile der Düsenkörper 12, die im Bereich der Düsenspitzen 26 im kalten Werkzeug dichtend eingebaut sind.

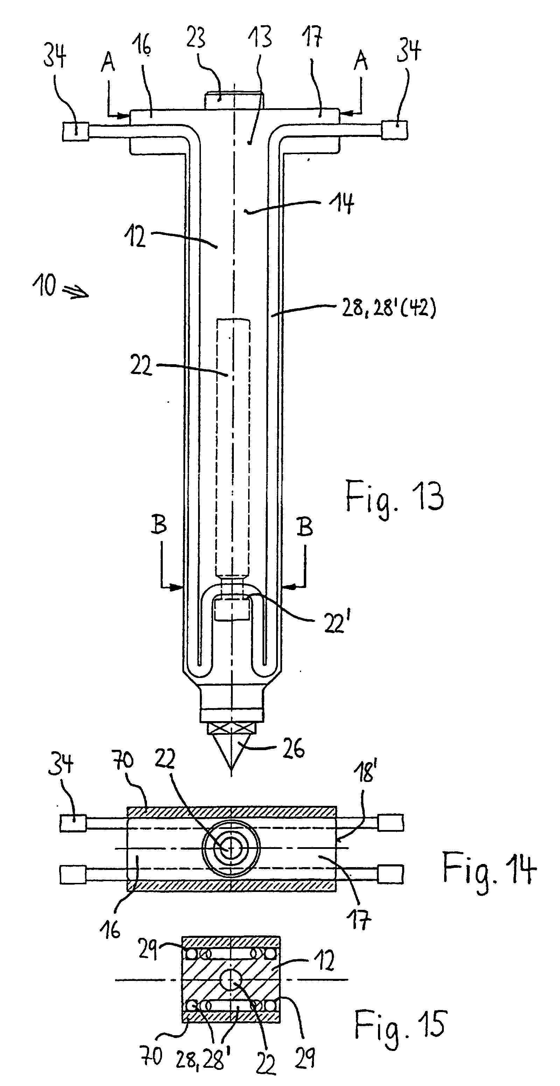

Eine noch andere Ausgestaltung der Erfindung zeigen die Fig. 13 bis 15. Die Beheizung des Düsenkörpers 12 erfolgt über einen in eine Nut 29 eingelegten Rohrheizkörper 28, wobei der Heizkörper in dem ersten Ansatz 16 beginnend am linken Rand der Seitenfläche 14 entlang bis in den Bereich der Düsenspitze 26 geführt ist, dort unter Ausbildung wenigstens zweier symmetrischer Schleifen zum rechten Rand der Seitenfläche 14 wechselt und von dort aus zu dem zweiten Ansatz 17 gelangt. In dem Bereich, in dem der Heizkörper die Seite wechselt ist der Strömungskanal 22 unter Ausbildung einer Stufe 22' verjüngt ausgebildet, damit der Düsenkörper 12 an dieser Stelle dem im Strömungskanal 22 herrschenden Druck standhält. Eine andere wichtige Funktion der Stufe 22' besteht darin, für die einschraubbare Düsenspitze 26 einen Anschlag zu bilden. Auf diese Weise ist gewährleistet, daß die Gesamtlänge der Düse 10 nach einem Wechsel der Düsenspitze 26 stets gleich bleibt. Eine erneute Justierung des Werkzeugs ist nicht erforderlich. Die Heizung kann in die Nut 29 form- und/oder kraftschlüssig eingepreßt oder eingelötet sein.

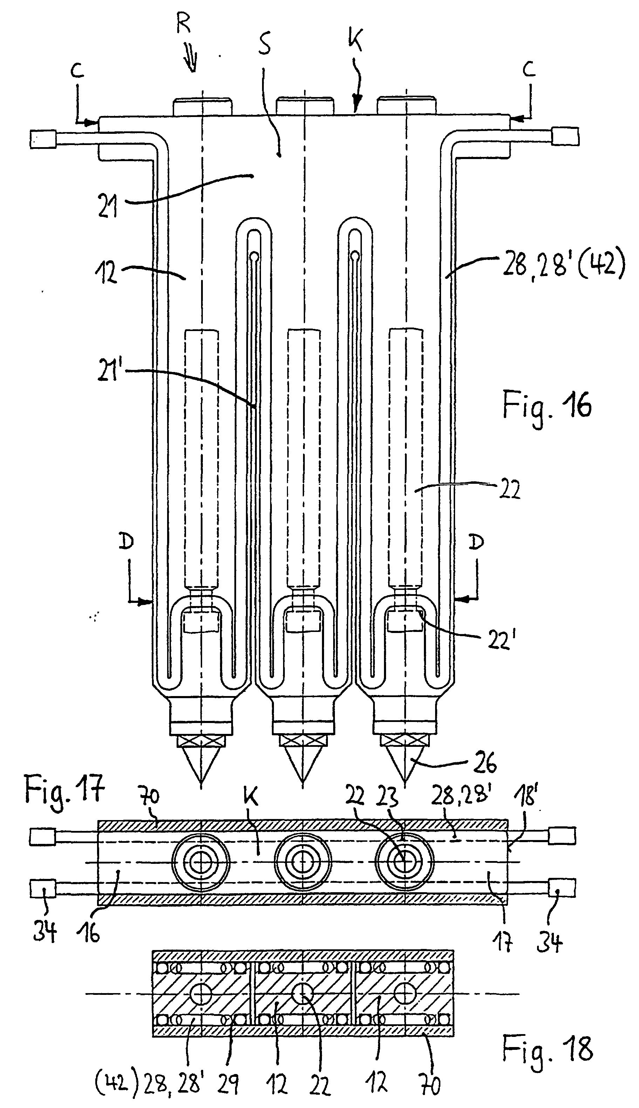

Man erkennt in Fig. 14 und 15, daß die auf beiden Seiten 14, 15 des Düsenkörpers 12 ausgebildeten Rohrheizungen 28 bündig mit dem Düsenkörper 12 abschließen und mittels einer zum Düsenkörper 12 formgleichen Abdeckung 70 nach außen hin abgedeckt sind. Für den Anschluß der Heizungen 28 an einen oder mehrere Heizkreise sind Anschlüsse 34 aus den Stirnflächen 18' der Ansätze 16, 17 herausgeführt.

Die Fig. 16 bis 18 zeigen eine Düsenreihe R, die von drei Heißkanaldüsen 10 gebildet wird. Die Düsenkörper 12 sind zu einen kammartigen Flachkörper K zusammengefaßt, der seitlich je eine Heizung 28 trägt. Deren Rohrheizkörper ist in eine Nut 29 eingelegt, die über die Stege 21 hinweg über alle drei Düsenkörper verlegt ist. Der elektrische Anschluß der Heizung 28 erfolgt über die an den äußeren Heißkanaldüsen ausgebildeten Ansätze 16, 17 in der oben bereits dargestellten Art und Weise.

Anstelle des Rohrheizkörpers 28 läßt sich in den Nuten 29 problemlos je eine Kühlschlange 42 einbringen, die zur Kühlung der Düsenkörper 12 bzw. des Flachkörpers K von einem Kühlmittel durchströmt werden. Eine derartig ausgebildete Kühlvorrichtung 28' hält eine in den Strömungskanälen 22 befindliche Masse auf einer konstant niedrigen Temperatur, so daß das System als Kaltkanalsystem Verwendung finden kann. Denkbar ist auch, die Kühlschlangen 42 unmittelbar in den Düsenkörpern 12 auszubilden, beispielsweise mittels Bohrungen. Oder man deckt die Nuten 29 dichtend mit Platten 70 ab, so daß das Kühlmittel direkt innerhalb der Nuten 29 fließen kann.

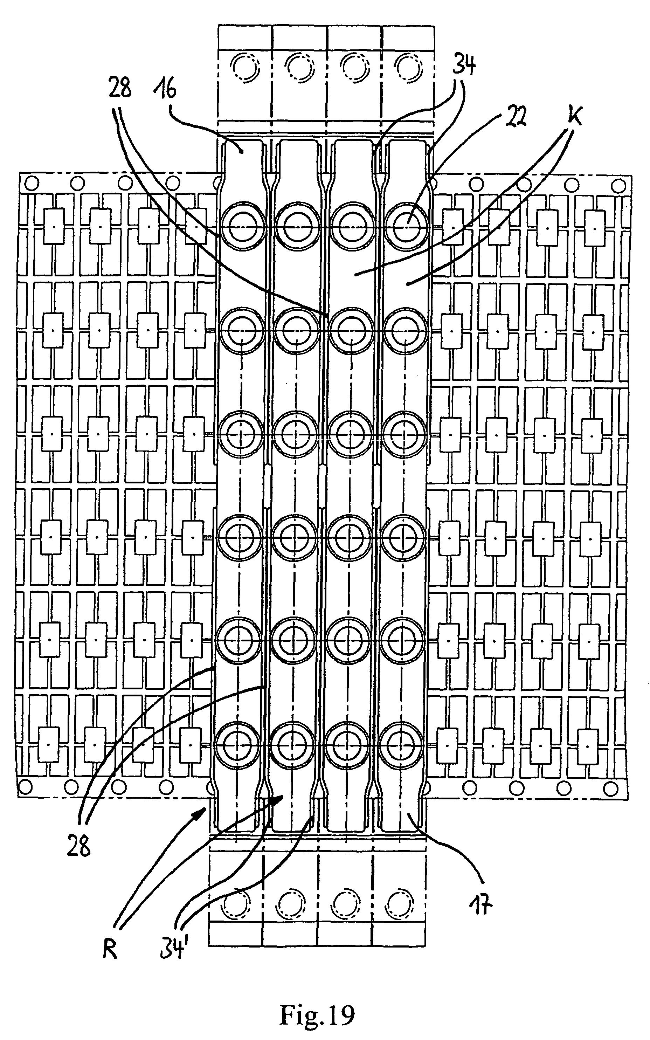

Eine bedeutsame Weiterbildung der Erfindung geht aus Fig. 19 hervor, wonach vier oder mehr Düsenreihen R im Flächenschluß parallel dicht nebeneinander angeordnet sind. Aufgrund der auf den jeweiligen Seitenflächen S der Düsenreihen R flach ausgebildeten Heizungen 28, sind die Abstände der Düsenspitzen 26 auch quer zur Längsrichtung der Reihen R relativ klein, so daß sich innerhalb einer solchen Düsenbatterie sowohl in X- als auch in Y-Richtung extrem kleine Angußpunktabstände von nur noch wenigen Millimetern realisieren lassen. Vielmehr können ganze Pakete von Angußpunkten mit Kunststoffmaterial versorgt werden. Da sich die zwischen den Düsenreihen R liegenden, unmittelbar benachbarten Heizflächen gegenseitig beeinflussen, kann die Gesamtheizleistung weiter verringert werden, was sich günstig auf den Energieverbrauch auswirkt.

Der Montageaufwand einer erfindungsgemäßen Düsenbatterie ist äußerst einfach und auf ein Minimum reduziert. Jede Düsenreihe R wird mit den außenliegenden Ansätzen 16, 17 rasch und bequem am Verteiler bzw. am Werkzeug festgelegt, d.h. die meist zeitaufwendige Befestigung zahlreicher Einzeldüsen ist nicht mehr erforderlich. Je nach der gewünschten Anzahl an Düsen 10 werden mehrere Reihen R einfach nebeneinander gelegt. Anschließend kann man die in Gruppen zusammengefaßten Heizungsvorrichtungen 28 über die Ansätze 16, 17 an die jeweils zugeordneten Heizkreise anschließen. Im Gegensatz zum herkömmlichen Stand der Technik werden die innen liegenden Heizungen 28 der Heißkanaldüsen 10 automatisch von außen mit Energie versorgt, ohne daß aufwendige Kabel oder Anschlußleitungen ab- bzw. zugeführt werden müssen. Der Installationsaufwand ist auf ein Minimum reduziert.

Zwischen den einzelnen Düsenreihen R kann man je nach Ausführungsform der Heizung 28 Abdeckplatten 70 vorsehen, wobei für zwei benachbarte Heizungen 28 eine Deckplatte ausreicht, die dann zu beiden Seiten hin isoliert ist. Alternativ kann man zwischen zwei Düsenreihen R auch nur jeweils eine Heizung 28 auf den Seitenflächen S der Flachkörper K bzw. auf den Seitenflächen 14, 15 der Düsenkörper 12 vorsehen. Die zu beiden Seiten einer Heizung 28 liegenden Strömungskanäle 22 werden dann zentral von dieser mit Wärme versorgt. Um die Düsenreihen R mit den Abdeckplatten zu verbinden und um die Reihen R bzw. deren Heizvorrichtungen 28 gegeneinander zu verspannen, verwendet man (nicht gezeigte) Schraubbolzen, welche die Flachkörper K an mehreren Stellen fluchtend durchsetzen oder man klammert die Düsenbatterie von außen mit einer oder mehreren (ebenfalls nicht dargestellten) Zwingen.

Noch engere Abstände der Düsenspitzen 26 erzielt man, wenn die Düsenreihen R in Längsrichtung versetzt zueinander angeordnet werden, indem jede Heißkanaldüse 10 seitlich in eine im Bereich der Stege 21 ausgebildete Vertiefung einsitzt.

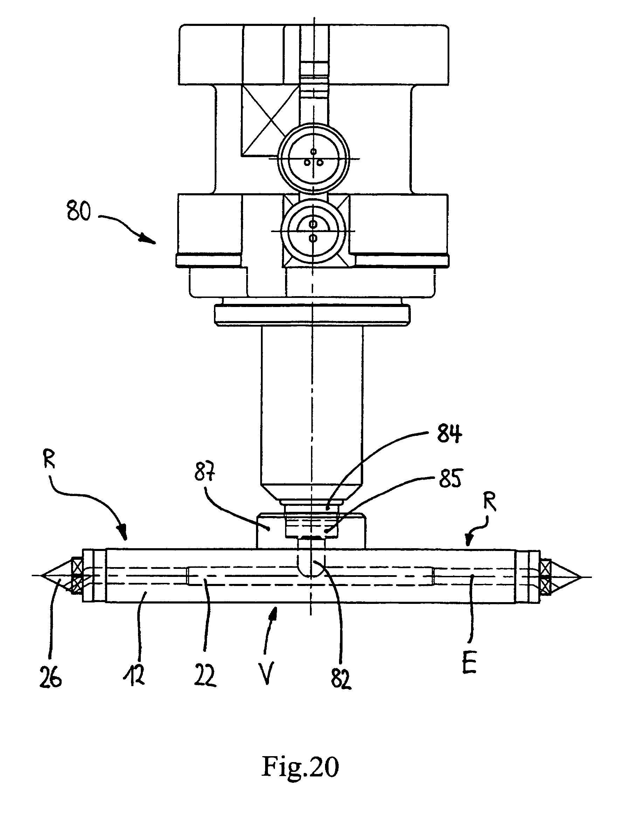

Die in den Fig. 20 bis 22 dargestellte Heißkanaldüsen-Anordnung ermöglicht in vorteilhafter Weise das horizontale Anspritzen mehrerer eng benachbarter Formennester. Zwei Düsenreihen R liegen horizontal in einer gemeinsamen Ebene E und sind im Bereich ihrer rückwärtigen Enden 13 miteinander verbunden, vorzugsweise einstückig.

Die Düsenkörper 12 und die in Längsrichtung L dazwischen ausgebildeten Stege 21 bilden einen Verteilerblock V mit Verteilerkanälen 82, die unmittelbar mit den Strömungskanälen 22 in den Düsenkörpem 12 in Strömungsverbindung stehen.

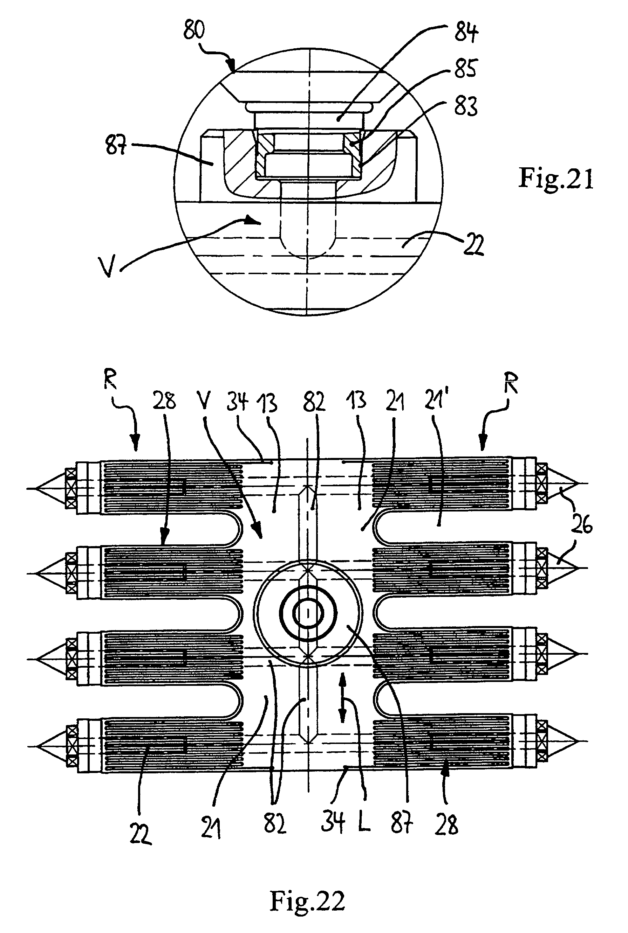

Auf dem Verteiler V ist eine separate Heiß- oder Kaltkanaldüse 80 als zentrale Materialzuführung angeordnet. Diese besitzt ein von einer (nicht sichtbaren) zylindrischen Heizung umschlossenes Materialrohr 84, das mit seinem freien Ende 85 seitlich dichtend in eine zentrische Einlaßöffnung 83 des Verteilers V eingesetzt ist. Auf diese Weise ist gewährleistet, daß beim Aufheizen bzw. Abkühlen des Systems ein axialer Dehnungsausgleich möglich ist bei gleichzeitiger Abdichtung. Man erkennt in Fig. 21, daß die Einlaßöffnung 83 in einem auf dem Verteiler V aufgesetzten Buchsenansatz 87 ausgebildet ist, was sich günstig auf den Dehnungsspielraum auswirkt.

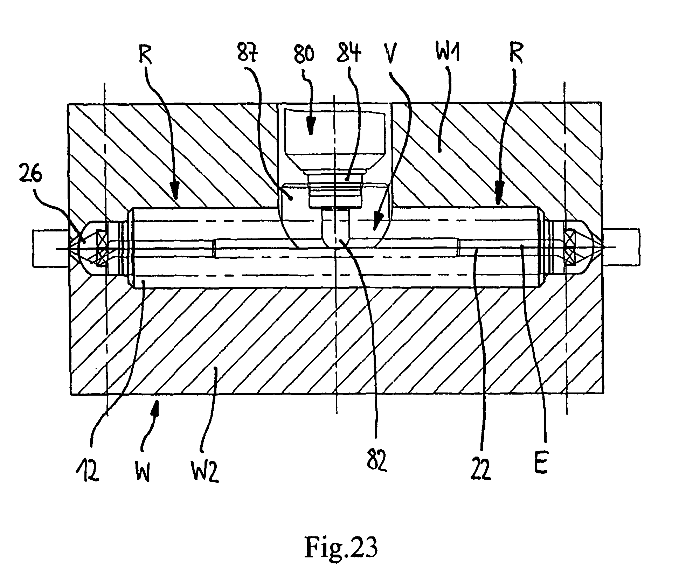

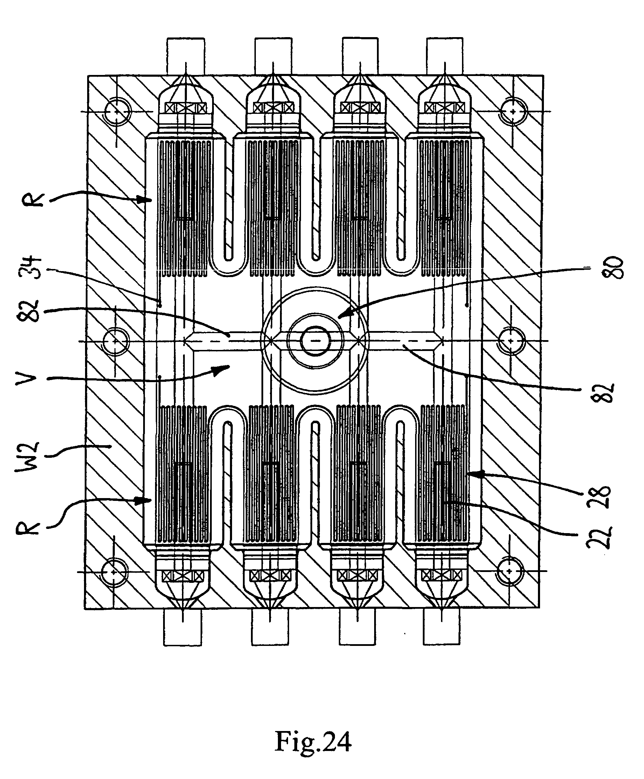

Fig. 23 und 24 zeigen die Einbausituation des Heißkanaldüsenblocks von Fig. 20 in einem Werkzeug W, das exakt symmetrisch zur Ebene E der Düsenreihen R in zwei Hälften W1 und W2 unterteilt ist. Aufgrund der horizontalen Reihenanordnung der Düsen 10 kann man das Werkzeug W auch vertikal teilen, nämlich symmetrisch zu der zentral angeordneten Düse 80.

Die Erfindung ist nicht auf eine der vorbeschriebenen Ausführungsformen beschränkt, sondern in vielfältiger Weise abwandelbar. So können die Seitenflächen 14, 15, S der Düsenkörper 12 bzw. der Düsenreihen R abschnittsweise leicht gekrümmt ausgebildete sein, was insbesondere dann günstig sein kann, wenn einander benachbarte Düsenreihen R in Längsrichtung versetzt zueinander angeordnet sind und die einzelnen Düsenkörper 12 in Vertiefungen in den Seitenflächen S einliegen.

Man erkennt, daß eine Düse 10 für ein Spritzgießwerkzeug einen an einem Werkzeug oder Verteiler montierbaren Düsenkörper 12 hat, in dem wenigstens ein endseitig an oder in einer Düsenspitze 26 mündender Strömungskanal 22 für eine Materialschmelze ausgebildet ist. Um in zwei unabhängigen Raumrichtungen extrem enge Nestabstände realisieren zu können, weist der Düsenkörper 12 wenigstens eine im wesentlichen ebene Seitenfläche 14, 15 auf, die in flächiger Verbindung und/oder Anordnung eine Heiz- und/oder Kühlvorrichtung 28, 28' für die Materialschmelze trägt oder aufnimmt. In einer besonderen Ausführungsform sind die Düsen 10 innerhalb einer Düsenreihe R parallel dicht nebeneinander angeordnet, wobei zwei einander gegenüberliegende Seitenflächen S der Düsenreihe R mit Heiz- und/oder Kühlvorrichtungen 28, 28' versehen sind, die gruppenweise über einen gemeinsamen, außen liegenden Anschluß 34 an einen Heiz- oder Kühlkreis anschließbar sind.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- b: Breite (Ansatz)
- B: Breite (Düsenkörper)
- D: Gesamtdicke (Düsenreihe)
- E: Ebene
- F: Folie
- K: Flachkörper
- L: Längsrichtung
- R: Düsenreihe
- S: Seitenfläche
- V: Verteiler(block)
- W: Werkzeug
- W1: Werkzeughälfte
- W2: Werkzeughälfte

- 10: Heiß-/Kaltkanaldüse
- 12: Düsenkörper
- 13: oberes Ende
- 14, 15: Seitenfläche (Düsenkörper)
- 16, 17: Ansatz
- 18: Seitenfläche (Ansatz)
- 18': Stirnfläche (Ansatz)
- 19: Oberseite (Ansatz)
- 20: Verbreiterung
- 21: Steg
- 21': Schlitz
- 22: Strömungskanal
- 22': Stufe
- 23: Zentrieransatz
- 24: Materialrohr
- 26: Düsenspitze

- 28: Heizvorrichtung
- 28': Kühlvorrichtung
- 29: Nut
- 30: Heizschicht
- 32: Heizleiterbahnen
- 34, 34': Anschlußkontakt
- 36: Ausnehmung/Tasche
- 37: Stift
- 38: Öffnung (Folie)
- 40: Isolierschicht
- 42: Kühlschlange
- 50: Abdeckschicht

- 60: Temperatur-Meßfühler
- 61: Meßschicht
- 62: Leiterbahn
- 64: Anschlußkontakt
- 66: Aufnahmekanal
- 67: Nut

- 70: Abdeckung
- 72: Isolierschicht

- 80: Materialzuführung/Düse
- 82: Verteilerkanal
- 83: Einlaßöffnung
- 84: Materialrohr
- 85: freies Ende
- 87: Buchsenansatz

## Patentansprüche

1. Düse (10) für ein Spritzgießwerkzeug mit einem an einem Werkzeug oder Verteiler montierbaren Düsenkörper (12), in dem wenigstens ein endseitig an oder in einer Düsenspitze (26) mündender Strömungskanal (22) für eine Materialschmelze ausgebildet ist, und mit einer Heiz- und/oder Kühlvorrichtung (28, 28') für die Materialschmelze, wobei der Düsenkörper (12) wenigstens eine im wesentlichen ebene Seitenfläche (14, 15) aufweist, die in flächiger Verbindung und/oder Anordnung die Heiz- und/oder Kühlvorrichtung (28, 28') als integralen Bestandteil trägt oder aufnimmt, **dadurch gekennzeichnet, daß** die Düse (10) samt der Heiz- und/oder Kühlvorrichtung (28, 28') einen Flachkörper (K) bildet, dessen Gesamtdicke (D) im wesentlichen von der Breite (B) des Düsenkörpers (12) bestimmt ist.

2. Düse nach Anspruch 2, **dadurch gekennzeichnet, daß** zwei einander gegenüberliegende Seitenflächen (14, 15) mit wenigstens einer Heiz- und/oder Kühlvorrichtung (28, 28') versehen sind.

3. Düse nach Anspruch 1 oder 2, **dadurch gekennzeichnet, daß** die Düse (10) eine Heißkanaldüse ist und daß jeder Heißkanaldüse (10) eine Heizvorrichtung (28) mit Heizleiterbahnen (32) zugeordnet ist, wobei die Leistungsverteilung auf jeder Seitenfläche (14, 15) dem Leistungsbedarf angepaßt ist

4. Düse nach Anspruch 1 oder 2, **dadurch gekennzeichnet, daß** die Düse (10) eine Kaltkanaldüse ist und daß jeder Kaltkanaldüse (10) eine Kühlvorrichtung (28') mit Kühlschlangen (42) zugeordnet ist, welche ein Kühl- oder Kältemittel führt, wobei die Leistungsverteilung auf jeder Seitenfläche (14, 15) dem Leistungsbedarf angepaßt ist.

5. Düse nach Anspruch 3 oder 4, **dadurch gekennzeichnet, daß** die Heizoder Kühlleistung nahe dem Bereich der Düsenspitze (26) konzentriert ist.

6. Düse nach einem der Ansprüche 3 bis 5, **dadurch gekennzeichnet, daß** die Heizleiterbahnen (32) bzw. die Kühlschlangen (42) zumindest abschnittsweise bifilar geführt sind.

7. Düse nach einem der Ansprüche 1 bis 6, **dadurch gekennzeichnet, daß** die auf den Seitenflächen (14, 15) ausgebildeten Heiz- und/oder Kühlvorrichtungen (28, 28') wenigstens einem Heiz- bzw. Kühlkreis zugeordnet sind.

8. Düse nach einem der Ansprüche 1 bis 7, **dadurch gekennzeichnet, daß** wenigstens einer Heiz- und/oder Kühlvorrichtung (28, 28') ein Temperatur-Meßfühler (60) zugeordnet ist.

9. Düse nach Anspruch 8, **dadurch gekennzeichnet, daß** der Temperatur-Meßfühler (60) Bestandteil des Düsenkörpers (12) ist, wobei wenigstens eine Seitenfläche (14, 15) den Meßfühler (60) in flächiger Verbindung und/oder Anordnung aufnimmt oder trägt.

10. Düse nach Anspruch 8, **dadurch gekennzeichnet, daß** der Temperatur-Meßfühler (60) in einem in dem Düsenkörper (12) ausgebildeten Aufnahmekanal (66) eingelassen ist, der im Bereich einer Verbreiterung (20) des Düsenkörpers (12) parallel zum Strömungskanal (22) verläuft.

11. Düse nach einem der Ansprüche 1 bis 10, **dadurch gekennzeichnet, daß** der Düsenkörper (12) an seinem oberen Ende (13) wenigstens einen seitlichen Ansatz (16, 17) aufweist, dessen Breite (b) die Breite (B) des Düsenkörpers (12) nicht übersteigt, wobei auf, an oder in einem der Ansätze (16, 17) Anschlüsse (34, 64) für die Heizvorrichtung (28), die Kühlvorrichtung (28') und/oder den Temperatur-Meßfühler (60) vorgesehen sind.

12. Düse nach Anspruch 11, **dadurch gekennzeichnet, daß** die Anschlüsse (34, 64) auf den Seitenflächen (18) der Ansätze (16, 17) ausgebildet sind.

13. Düse nach Anspruch 11 oder 12, **dadurch gekennzeichnet, daß** zumindest einer der Ansätze (16, 17) gegenüber dem Düsenkörper (12) verjüngt ausgebildet ist.

14. Düse nach einem der Ansprüche 1 bis 13, **dadurch gekennzeichnet, daß** die Heizvorrichtung (28) eine Flachschichtheizung ist, welche in wenigstens zwei Schichten (30, 40) ausgebildet ist, wobei die Heizleiterbahnen (32) eine auf einer Isolierschicht (40) aufgebrachte Heizschicht (30) bilden.

15. Düse nach Anspruch 14, **dadurch gekennzeichnet, daß** die Isolierschicht (40) eine keramische Dielektrikumsschicht ist, die unlösbar auf der Seitenfläche (14, 15) aufgebracht ist und nach wenigstens einem Einbrennprozeß gegenüber dieser unter Druckvorspannung steht, wobei der lineare thermische Ausdehnungskoeffizient (TEC_{DE}) der Dielektrikumsschicht (40)' kleiner ist als der lineare thermische Ausdehnungskoeffizient (TEC_{K}) des Materials der Seitenfläche (14, 15).

16. , Düse nach Anspruch 14 oder 15, **dadurch gekennzeichnet, daß** auf der Heizschicht (30) wenigstens eine elektrisch isolierende Abdeckschicht (50) aufgebracht ist.

17. Düse nach einem der Ansprüche 14 bis 16, **dadurch gekennzeichnet, daß** der Temperatur-Meßfühler (60) als Schicht ausgebildet ist, wobei die Heizschicht (30) und die Meßschicht (60) übereinander oder in gleicher Ebene ausgebildet sind.

18. Düse nach einem der Ansprüche 14 bis 17, **dadurch gekennzeichnet, daß** die Heizschicht (30), die Isolierschicht (40), die Abdeckschicht (50), die Kontaktschicht und die Meßschicht (60) einen Schichtverbund bilden, wobei die Gesamtdicke der Flachschichtheizung (28) zwischen 0,1 und 1,0 mm, vorzugsweise zwischen 0,2 und 0,6 mm, liegt.

19. Düse nach einem der Ansprüche 14 bis 18, **dadurch gekennzeichnet, daß** die Heizschicht (30), die Isolierschicht (40), die Abdeckschicht (50), die Kontaktschicht und/oder die Meßschicht (60) eingebrannte Folien oder eingebrannte Dickschichtpasten sind oder mittels Detonationsbeschichtung oder Plasmabeschichtung auf den Seitenflächen (14, 15) aufbringbar sind.

20. Düse nach einem der Ansprüche 14 bis 19, **dadurch gekennzeichnet, daß** die Heizschicht (30) eine auf der Isolierschicht (40) aufgebrachte Metallfolie ist.

21. Düse nach einem der Ansprüche 1 bis 13, **dadurch gekennzeichnet, daß** die Heizvorrichtung (28) eine Draht- oder Rohrheizung ist.

22. Düse nach einem der Ansprüche 1 bis 21, **dadurch gekennzeichnet, daß** jede Heiz- und/oder Kühlvorrichtung (28, 28') in einer Nut (29) oder einer Ausnehmung (36) in der jeweils zugeordneten Seitenfläche (14, 16) eingelassen ist.

23. Düse nach einem der Ansprüche 1 bis 22, **dadurch gekennzeichnet, daß** jede Heiz- und/oder Kühlvorrichtung (28, 28') bündig mit dem Düsenkörper (12) abschließt.

24. Düse nach einem der Ansprüche 1 bis 23, **dadurch gekennzeichnet, daß** jede Heiz- und/oder Kühlvorrichtung (28, 28') mit einer Abdeckung (70) versehen ist.

25. Düsen-Anordnung für Spritzgießwerkzeuge bestehend aus wenigstens zwei Düsen (10) mit jeweils einem an einem Werkzeug oder Verteiler montierbaren Düsenkörper (12), in dem wenigstens ein endseitig an oder in einer Düsenspitze (26) mündender Strömungskanal (22) für eine Materialschmelze ausgebildet ist, und mit einer Heiz- und/oder Kühlvorrichtung (28, 28') für die Materialschmelze, die einen integralen Bestandteil jeder Düse (10) darstellt, wobei die Düsen (10) eine Düsenreihe (R) bilden und innerhalb dieser parallel dicht nebeneinander angeordnet sind, nach wenigstens einem der Ansprüche 1 bis 24, **dadurch gekennzeichnet, daß** die Düsenreihe (R) einen Flachkörper (K) bildet und wenigstens eine im wesentlichen ebene Seitenfläche (S) aufweist, die in flächiger Verbindung und/oder Anordnung die Heiz- und/oder Kühlvorrichtung (28, 28') trägt oder aufnimmt, wobei die Gesamtdicke (D) des Flachkörpers (K) im wesentlichen von der Breite (B) der Düsenkörper (12) bestimmt ist.

26. Düsen-Anordnung nach Anspruch 25, **dadurch gekennzeichnet, daß** zumindest ein seitlicher Ansatz (16, 17) des Düsenkörpers (12) an einer in der Reihe (R) außen liegenden Düse (10) ausgebildet ist.

27. Düsen-Anordnung nach Anspruch 25 oder 26, **dadurch gekennzeichnet, daß** die Heizvorrichtungen (28) bzw. die Kühlvorrichtungen (28') benachbarter Düsen (10) miteinander verbunden und einem gemeinsamen Anschluß (34) zugeordnet sind.

28. Düsen-Anordnung nach Anspruch 25 oder 26, **dadurch gekennzeichnet, daß** die Heizvorrichtungen (28) bzw. die Kühlvorrichtungen (28') benachbarter Düsen (10) gruppenweise separaten Heiz- bzw. Kühlkreisen mit separaten Anschlüssen (34, 34') zugeordnet sind.

29. Düsen-Anordnung nach einem der Ansprüche 25 bis 28, **dadurch gekennzeichnet, daß** wenigstens zwei Düsenreihen (R) in einem Werkzeug oder Verteiler im Flächenschluß nebeneinander angeordnet sind.

30. Düsen-Anordnung nach Anspruch 29, **dadurch gekennzeichnet, daß** die Düsenreihen (R) versetzt angeordnet sind.

31. Düsen-Anordnung nach einem der Ansprüche 25 bis 28, **dadurch gekennzeichnet, daß** zwei Düsenreihen (R) in einer gemeinsamen Ebene (E) liegen und an ihren rückwärtigen Enden miteinander verbunden, beispielsweise einstückig sind.

32. Düsen-Anordnung nach Anspruch 31, **dadurch gekennzeichnet, daß** die Düsenreihen (R) eine gemeinsame zentrale Materialzuführung (80) mit Verteilerkanälen (82) aufweisen.

33. Düsen-Anordnung nach Anspruch 32, **dadurch gekennzeichnet, daß** die Verteilerkanäle (82) balanciert sind.

## Claims

1. Nozzle (10) for an injection moulding tool having a nozzle body (12) suited to be mounted on a tool or a manifold, with the nozzle body comprising at least one flow channel (22) for a molten mass which terminates at or in a nozzle tip (26), and having a heating and/or cooling device (28, 28') for the molten mass, with said nozzle body (12) comprising at least one substantially flat lateral surface (14, 15) which supports or receives the heating and/or cooling device (28, 28') as integral part via a surface connection and/or arrangement, wherein the nozzle (10) including the heating and/or cooling device (28, 28') forms a flat body (K) whose overall thickness (D) is substantially determined by the width (B) of the nozzle body (12).

2. Nozzle according to claim 2, **wherein** two opposite lateral surfaces (14, 15) are provided with at least one heating and/or cooling device (28, 28').

3. Nozzle according to claim 1 or claim 2, **wherein** the nozzle (10) is a hot runner nozzle, and a heating device (28) with heat conducting paths (32) is assigned to each hot runner nozzle (10), with the heating power distribution on each lateral surface (14, 15) being adapted to the required power.

4. Nozzle according to claim 1 or claim 2, **wherein** the nozzle (10) is a cold runner nozzle, and a cooling device (28') with cooling coils (42) containing a cooling or refrigerating agent is assigned to each cold runner nozzle (10), with the cooling power distribution on each lateral surface (14, 15) being adapted to the required power.

5. Nozzle according to claim 3 or claim 4, wherein the heating or cooling power is concentrated near the area of the nozzle tip (26).

6. Nozzle according to any one of claims 3 to 5, **wherein** the heat conducting paths (32) and the cooling coils (42), respectively, are bifilar at least along some sections.

7. Nozzle according to any one of claims 1 to 6, **wherein** the heating and/or cooling devices (28, 28') realized on the lateral surfaces (14, 15) are associated to at least one heating or cooling circuit, respectively.

8. Nozzle according to any one of claims 1 to 7, **wherein** a temperature sensor (60) is associated to at least one heating or cooling device (28, 28'), respectively.

9. Nozzle according to claim 8, wherein the temperature sensor (60) is an integral part of the nozzle body (12), with at least one lateral surface (14, 15) receiving or supporting the temperature sensor (60) via a surface connection and/or arrangement.

10. Nozzle according to claim 8, **wherein** the temperature sensor (60) is inserted into a channel (66) realized in the nozzle body (12) so as to run parallel to the flow channel (22) in the area of an enlargement (20) of the nozzle body (12).

11. Nozzle according to any one of claims 1 to 10, **wherein** the nozzle body (12) comprises on its upper end (13) at least one lateral projection (16, 17) whose width (b) does not exceed the width (B) of the nozzle body (12), with connectors (34, 64) for the heating device (28), for the cooling device (28') and/or for the temperature sensor (60) being provided on, at or in one of the projections (16, 17).

12. Nozzle according to claim 11, **wherein** the connectors (34, 64) are realized on the lateral surfaces (18) of the projections (16, 17).

13. Nozzle according to claim 11 or claim 12, wherein at least one of the projections (16, 17) is tapered with regard to the nozzle body (12).

14. Nozzle according to any one of claims 1 to 13, **wherein** the heating device (28) is a flat layer heater comprising at least two layers (30, 40), with the heat conducting paths (32) forming a heating coating (30) applied onto an insulation layer (40).

15. Nozzle according to claim 14, wherein the insulation layer (40) is a ceramic dielectric layer which is undetachably applied on the lateral surface (14, 15) and which, after at least one baking process, is prestressed in respect of said surface (14, 15), with the linear coefficient of thermal expansion (TEC_{DE}) of the dielectric layer (40) being smaller than the linear coefficient of thermal expansion (TEC_{K}) of the material from which the lateral surface (14, 15) is made.

16. Nozzle according to claim 14 or claim 15, wherein at least one dielectric final cover (50) is applied onto the heating coating (30).

17. Nozzle according to any one of claims 14 to 16, **wherein** the temperature sensor (60) is realized as a layer, with the heating coating (30) and the measuring layer (60) being superimposed or in-plane.

18. Nozzle according to any one of claims 14 to 17, **wherein** the heating coating (30), the insulation layer (40), the final cover (50), the contact layer and the measuring layer (60) form a layer bond, with the overall thickness of the flat layer heater (28) amounting to between 0.1 mm and 1.0 mm, preferably between 0.2 mm and 0.6 mm.

19. Nozzle according to any one of claims 14 to 18, **wherein** the heating coating (30), the insulation layer (40), the final cover (50), the contact layer and/or the measuring layer (60) are baked foils or baked thick-film pastes, or are applicable on the lateral surfaces (14, 15) by means of detonation coating or plasma coating.

20. Nozzle according to any one of claims 14 to 19, wherein the heating coating (30) is a metal foil which is applied onto the insulation layer (40).

21. Nozzle according to any one of claims 1 to 13, **wherein** the heating device (28) is a cable heater or a tubular heater.

22. Nozzle according to any one of claims 1 to 21, **wherein** each heating and/or cooling device (28, 28') is inserted into a groove (29) or a recess (36) in the lateral surface (14, 15) associated thereto.

23. Nozzle according to any one of claims 1 to 22, **wherein** each heating and/or cooling device (28, 28') is flush with the nozzle body (12).

24. Nozzle according to any one of claims 1 to 23, **wherein** each heating and/or cooling device (28, 28') is provided with a top plate (70).

25. Nozzle arrangement for injection moulding tools consisting of at least two nozzles (10) having a nozzle body (12) suited to be mounted on a tool or a manifold with at least one flow channel (22) for a molten mass which terminates at or in a nozzle tip (26), and having, as an integral part of each nozzle (10), a heating and/or cooling device (28, 28') for the molten mass, with said nozzles (10) forming a nozzle line (R) in which they are in parallel arrangement closely adjacent to each other, according to at least one of the claims 1 to 24, wherein the nozzle line (R) forms a flat body (K) and comprises at least one substantially flat lateral surface (S) which supports or receives the heating and/or cooling device (28, 28') via a surface connection and/or arrangement), with the overall thickness (D) of the flat body (K) being substantially determined by the width (B) of the nozzle body (12).

26. Nozzle arrangement according to claim 25, **wherein** at least one lateral projection (16, 17) of the nozzle body (12) is realized on a nozzle (10) which is situated at the end of the line (R).

27. Nozzle arrangement according to claim 25 or claim 26, **wherein** the heating devices (28) and the cooling devices (28') of adjacent nozzles (10) are interconnected and are associated to a common connector (34).

28. Nozzle arrangement according to claim 25 or claim 26, wherein the heating devices (28) and the cooling devices (28') of adjacent nozzles (10) are combined to form groups associated to separate heating and cooling circuits, respectively, with separate connectors (34, 34').

29. Nozzle arrangement according to any one of claims 25 to 28, **wherein** at least two nozzle lines (R) are arranged in positive surface fit side by side in a tool or manifold.

30. Nozzle arrangement according to claim 29, **wherein** the nozzle lines (R) are arranged in a staggered configuration.

31. Nozzle arrangement according to any one of claims 25 to 28, **wherein** two nozzle lines (R) are situated in a common plane (E) and are interconnected at their rear ends, e.g. integrally.

32. Nozzle arrangement according to claim 31, wherein the nozzle lines (R) comprise a common central material feeding device (80) including runners (82).

33. Nozzle arrangement according to claim 32, **wherein** the runners (82) are balanced.

## Revendications

1. Buse (10) pour un outil de moulage par injection, avec un corps de buse (12) qui peut être monté sur un outil ou sur un distributeur et dans lequel a été façonné au moins un canal d'écoulement d'une masse fondue (22) qui à son extrémité débouche sur ou dans une pointe de buse (26), et avec un dispositif de chauffage et/ou de refroidissement (28, 28') de la masse fondue, le corps de buse (12) disposant d'au moins une surface latérale (14, 15) globalement plane qui porte ou reçoit en un assemblage de surface et/ou en un arrangement le dispositif de chauffage et/ou de refroidissement (28, 28') en tant qu'élement intégré, **caractérisée en ce que** la buse (10), ensemble avec le dispositif de chauffage et/ou de refroidissement (28, 28'), forme un corps plat (K) dont l'épaisseur totale (D) est déterminée en premier lieu par la largeur (B) du corps de buse (12).

2. Buse selon la revendication 1, **caractérisée en ce que** deux surfaces latérales opposées (14, 15) sont pourvues d'au moins un dispositif de chauffage et/ou de refroidissement (28, 28').

3. Buse selon la revendication 1 ou 2, **caractérisée en ce que** la buse (10) est une buse à canal chaud, et **en ce qu'**un dispositif de chauffage (28) avec des conduites de chauffage (32) est affecté à chaque buse à canal chaud (10), la distribution de la puissance sur chaque surface latérale (14, 15) étant adaptée au besoin de puissance.

4. Buse selon la revendication 1 ou 2, **caractérisée en ce que** la buse (10) est une buse à canal froid, et **en ce qu'**un dispositif de refroidissement (28') avec des serpentins (42) conduisant un fluide réfrigérant ou frigorigène est affecté à chaque buse à canal froid (10), la distribution de la puissance sur chaque surface latérale (14, 15) étant adaptée au besoin de puissance.

5. Buse selon la revendication 3 ou 4, **caractérisée en ce que** la puissance calorifique ou frigorifique est concentrée à proximité de la zone de la pointe de la buse (26).

6. Buse selon l'une des revendications 3 à 5, **caractérisée en ce qu'**au moins par sections, les conduites de chauffage (32) et/ou les serpentins (42) sont conduits bifilaires.

7. Buse selon l'une des revendications 1 ou 6, **caractérisée en ce que** les dispositifs de chauffage et/ou de refroidissement (28, 28') formés sur les surfaces latérales (14, 15) sont affectés à au moins un circuit de chauffage ou de refroidissement.

8. Buse selon l'une des revendications 1 ou 7, **caractérisée en ce qu'**un palpeur de mesure de la température (60) est affecté à au moins un dispositif de chauffage et/ou de refroidissement (28, 28').

9. Buse selon la revendication 8, **caractérisée en ce que** le palpeur de mesure de la température (60) fait partie intégrante du corps de buse (12), alors qu'au moins une surface latérale (14, 15) reçoit ou porte le palpeur de mesure (60) par connection ou assemblage plane.

10. Buse selon la revendication 8, **caractérisée en ce que** le palpeur de mesure de la température (60) est encastré dans un canal de réception (66) qui est formé dans le corps de buse (12) et qui est disposé parallèlement au canal d'écoulement (22), dans la zone d'un élargissement (20) du corps de buse (12).

11. Buse selon l'une des revendications 1 ou 10, **caractérisée en ce que** le corps de buse (12) dispose à son extrémité supérieure (13) d'au moins une saillie latérale (16, 17), dont la largeur (b) n'est pas supérieure à la largeur (B) du corps de buse (12), des raccords (34, 64) étant prévus sur ou dans l'une des saillies (16, 17) pour le dispositif de chauffage (28), pour le dispositif de refroidissement (28') et/ou pour le palpeur de mesure de la température (60).

12. Buse selon la revendication 11, **caractérisée en ce que** les raccords (34, 64) sont agencés sur les surfaces latérales (18) des saillies (16, 17).

13. Buse selon la revendication 11 ou 12, **caractérisée en ce qu'**au moins l'une des saillies (16, 17) est conçue rétrécie par rapport au corps de buse (12).

14. Buse selon l'une des revendications 1 à 13, **caractérisée en ce que** le dispositif de chauffage (28) est un chauffage à couche plate, lequel a été conçu à au moins deux couches (30, 40), les conduites de chauffage (32) formant une couche de chauffage (30) appliquée sur une couche isolante (40).

15. Buse selon la revendication 14, **caractérisée en ce que** la couche isolante (40) est une couche céramique diélectrique qui a été appliquée inamoviblement sur la surface latérale (14, 15) et qui, après au moins un processus de cuisson, est soumise à une précontrainte par rapport à celle-ci, le coefficient linéaire de dilation thermique (TEC_{DE}) de la couche diélectrique (40) étant plus petit que le coefficient linéaire de dilation thermique (TEC_{K}) du matériau de la surface latérale (14, 15).

16. Buse selon la revendication 14 ou 15, **caractérisée en ce qu'**au moins une couche de recouvrement et d'isolation électrique (50) a été appliquée sur la couche de chauffage (30).

17. Buse selon l'une des revendications 14 à 16, **caractérisée en ce que** le palpeur de mesure de la température (60) a été façonné en tant que couche, la couche de chauffage (30) et la couche de palpage (60) ayant été conçues superposées ou sur un même plan.

18. Buse selon l'une des revendications 14 à 17, **caractérisée en ce que** la couche de chauffage (30), la couche isolante (40), la couche de recouvrement (50), la couche de contact et la couche de palpage (60) forment un compound de couches, l'épaisseur totale du chauffage à couche plate (28) allant de 0,1 à 1,0 mm, de préférence de 0,2 à 0,6 mm.

19. Buse selon l'une des revendications 14 à 18, **caractérisée en ce que** la couche de chauffage (30), la couche isolante (40), la couche de recouvrement (50), la couche de contact et/ou la couche de palpage (60) sont des couches cuites ou des pâtes de couches épaisses cuites, ou qu'elles peuvent être appliquées sur les surfaces latérales (14, 15) au moyen du couchage à détonation ou du couchage à plasma.

20. Buse selon l'une des revendications 14 à 19, **caractérisée en ce que** la couche de chauffage (30) est une feuille métallique appliquée sur la couche isolante (40).

21. Buse selon l'une des revendications 1 à 13, **caractérisée en ce que** le dispositif de chauffage (28) est un chauffage à fil ou à tube.

22. Buse selon l'une des revendications 1 à 21, **caractérisée en ce que** chaque dispositif de chauffage et/ou de refroidissement (28, 28') est encastré dans une rainure (29) ou dans un évidement (36), dans la surface latérale correspondante (14, 16).

23. Buse selon l'une des revendications 1 à 22, **caractérisée en ce que** chaque dispositif de chauffage et/ou de refroidissement (28, 28') se termine à fleur avec le corps de buse (12).

24. Buse selon l'une des revendications 1 à 23, **caractérisée en ce que** chaque dispositif de chauffage et/ou de refroidissement (28, 28') est pourvu d'un recouvrement (70).

25. Dispositif de buses pour outils de moulage par injection, consistant en au moins deux buses (10) avec un corps de buse respectif (12) pouvant être monté sur un outil ou sur un distributeur et dans lequel au moins un canal d'écoulement (22) de la masse fondue a été façonné à l'extrémité sur ou dans une pointe de buse (26), et avec un dispositif de chauffage et/ou de refroidissement (28, 28') destiné à la masse fondue et faisant partie intégrante de chaque buse (10), les buses (10) formant une rangée de buses (R) et étant agencées parallèlement et étroitement les unes à côté des autres à l'intérieur de cette rangée, selon au moins l'une des revendications 1 à 24, **caractérisé en ce que** la rangée de buses (R) forme un corps plat (K) et dispose d'au moins une surface latérale globalement plane (S) qui porte ou reçoit en un assemblage de surface et/ou en un arrangement le dispositif de chauffage et/ou de refroidissement (28, 28'), l'épaisseur totale (D) du corps plat (K) étant déterminée en premier lieu par la largeur (B) du corps de buse (12).

26. Dispositif de buses selon la revendication 25, **caractérisé en ce qu'**au moins une saillie latérale (16, 17) du corps de buse (12) a été façonnée sur une buse (10) se trouvant à l'extérieur de la rangée (R).

27. Dispositif de buses selon la revendication 25 ou 26, **caractérisé en ce que** les dispositifs de chauffage (28) ou les dispositifs de refroidissement (28') de buses voisines (10) sont connectés les uns aux autres et affectés à un raccord commun (34).

28. Dispositif de buses selon la revendication 25 ou 26, **caractérisé en ce que** les dispositifs de chauffage (28) ou les dispositifs de refroidissement (28') de buses voisines (10) sont affectés par groupes à des circuits de chauffage ou de refroidissement individuels avec des raccords individuels (34, 34').

29. Dispositif de buses selon l'une des revendications 25 à 28, **caractérisé en ce qu'**au moins deux rangées de buses (R) dans un outil ou dans un distributeur sont agencées par engagement positif côte à côte.

30. Dispositif de buses selon la revendication 29, **caractérisé en ce que** les rangées de buses (R) sont disposées de manière décalée.

31. Dispositif de buses selon l'une des revendications 25 à 28, **caractérisé en ce que** deux rangées de buses (R) se trouvent sur un plan commun (E) et qu'elles sont reliées l'une à l'autre à leurs extrémités arrières, par exemple en une pièce monobloc.

32. Dispositif de buses selon la revendication 31, **caractérisé en ce que** les rangées de buses (R) disposent d'une alimentation centrale commune (80) pour l'écoulement de la masse par des canaux de distribution (82).

33. Dispositif de buses selon la revendication 32, **caractérisé en ce que** les canaux de distribution (82) sont équilibrés.
